# FASCICULE DE BREVET EUROPEEN

(11) **EP 1 685 985 B1**
(45) Date de publication et mention de la délivrance du brevet: **30.03.2016**
(21) Numéro de dépôt: 06100349.7
(22) Date de dépôt: 13.01.2006
(51) Int. Cl.: B60C 23/00

(54) **Dispositif et procédé de mesure et de régulation de la pression d'un pneumatique**
Vorrichtung und Verfahren zur Messung und Regulierung des Reifenfülldrucks
Device and method for measuring and controlling tyre pressure

(30) Priorité: 27.01.2005 FR 0500827
(43) Date de publication de la demande: 02.08.2006
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: Alff, Denis, 63200, Malauzat (FR)
(74) Mandataire: Dequire, Philippe Jean-Marie Denis

(56) Documents cités:
- DE-A1- 3 236 594
- US-A1- 2004 055 291
- US-B1- 6 212 464

## Description

La présente invention concerne un dispositif et un procédé de mesure et de régulation de la pression d'au moins un pneumatique monté sur une roue de véhicule.

On connaît déjà dans l'état de la technique, notamment d'après le document EP-B1-0 671 998, un dispositif de mesure et de régulation de la pression d'un pneumatique monté sur une roue de véhicule, du type comprenant une source d'air sous pression, un circuit d'alimentation d'air reliant la source au pneumatique et des moyens de mesure de pression dans le circuit ou dans le pneumatique.

Un dispositif tel que décrit par le préambule de la revendication 1 est connu de DE 323 6 594.

Dans la suite de la description, on oriente le circuit depuis la source d'air vers le pneumatique. Ainsi, on qualifie « d'amont » une partie du circuit qui est proche de la source d'air et « d'aval » une partie du circuit qui est proche du pneumatique.

Le circuit d'alimentation comprend généralement un clapet s'ouvrant lorsque la pression dans le circuit dépasse la pression dans le pneumatique d'une valeur prédéterminée.

Lors de l'alimentation en air du pneumatique au moyen d'un dispositif du type précité, la pression dans le circuit ou dans le pneumatique est généralement instable. Tant que la pression est instable, il est difficile de mesurer avec exactitude la pression dans le circuit ou dans le pneumatique. Pour éviter ce problème, on a donc proposé de mesurer la pression d'un pneumatique conformément au procédé suivant :
- on alimente le circuit en air comprimé de façon à ouvrir le clapet pour mettre en communication fluidique le circuit avec l'intérieur du pneumatique,
- on arrête l'alimentation en air comprimé,
- on attend que la pression dans le circuit et dans le pneumatique se stabilise, et
- on mesure la pression dans le circuit ou le pneumatique.

Ce procédé permet d'obtenir une mesure précise de la pression dans le pneumatique lors de son gonflage mais il nécessite d'arrêter fréquemment l'alimentation en air comprimé. Ce procédé est donc particulièrement long et contraignant.

De plus, avec ce procédé de mesure de pression d'un pneumatique, à chaque mesure de pression dans le circuit, de l'air est injecté dans le pneumatique ce qui augmente sa pression. La multiplication des mesures de pression risque donc d'augmenter anormalement la pression dans le pneumatique.

L'invention a pour but de s'affranchir des problèmes d'instabilité de pression de façon à pouvoir réguler plus précisément la pression dans le pneumatique.

A cet effet, l'invention a pour objet un dispositif de mesure et de régulation de la pression d'au moins un pneumatique monté sur une roue de véhicule, du type précité, caractérisé en ce que le circuit comprend des moyens intercalés dans le circuit, destinés à générer une perte de charge forcée, la perte de charge du circuit en aval des moyens générateurs de perte de charge étant inférieure à 10% de la perte de charge générée par les moyens générateurs de perte de charge et en ce que les moyens de mesure de pression mesurent la pression, dans le pneumatique ou dans le circuit, en aval des moyens générateurs de perte de charge.

Dans ce qui suit, on désignera respectivement par « partie aval » et « partie amont » les parties du circuit en aval et en amont des moyens générateurs de perte de charge.

Les moyens générateurs de perte de charge dans le circuit permettent de réduire la pression de l'air injecté dans la partie aval du circuit par la source d'air et de la rendre plus uniforme. Ainsi, on s'affranchit des problèmes d'instabilité de pression dans le circuit ce qui permet notamment de faire une estimation de la pression dans le pneumatique par mesure de la pression dans le circuit avant mise en communication de ce circuit avec le pneumatique. Cela permet également de faire des mesures fiables de pression lors du gonflage, sans qu'il soit nécessaire d'attendre que la pression dans le pneumatique et dans le circuit ne se stabilise.

Un dispositif de régulation de la pression selon l'invention peut en outre comporter l'une ou plusieurs des caractéristiques suivantes :
- La perte de charge du circuit en aval des moyens générateurs de perte de charge est comprise entre 3% et 6% de la perte de charge des moyens générateurs de perte de charge. Des essais ont montré que ces valeurs permettaient d'obtenir une pression particulièrement stable dans le circuit.
- Les moyens générateurs de perte de charge comprennent un étranglement. Une réduction localisée de la section de circuit permet en effet d'obtenir une perte de charge suffisante.
- L'étranglement comprend au moins un gicleur.
- La partie aval du circuit comprend un clapet s'ouvrant lorsque la pression dans la partie aval du circuit dépasse la pression dans le pneumatique d'une valeur prédéterminée, de préférence voisine de zéro. On utilise par exemple un clapet anti-retour qui permet, lors du gonflage, d'injecter de l'air dans le pneumatique de façon simple, en amenant le circuit à une pression supérieure à celle du pneumatique. Dès que la pression dans le pneumatique est supérieure à la pression dans le circuit, le clapet anti-retour se ferme, ce qui empêche le pneumatique de se dégonfler.
- La partie aval du circuit comprend une électrovanne intercalée en amont du clapet. La présence d'électrovannes permet de réguler la pression d'un pneumatique indépendamment des autres pneumatiques du véhicule.
- Le dispositif régule la pression de deux pneumatiques, et comprend une électrovanne commune aux deux circuits d'alimentation en air des deux pneumatiques, les parties des circuits situés en aval de l'électrovanne étant en communication fluidique. Cette configuration du dispositif de régulation de la pression permet d'équilibrer la pression entre les deux pneumatiques. Ceci est particulièrement intéressant pour s'assurer que les deux pneumatiques de l'essieu avant ou de l'essieu arrière du véhicule sont gonflés à une pression identique.
- Le dispositif est destiné à réguler la pression de deux pneumatiques, chaque circuit d'alimentation comprenant une électrovanne, les électrovannes étant agencées pour permettre une communication fluidique entre les parties des circuits situées en amont des électrovannes. Grâce à cette configuration, il est possible de réutiliser l'air comprimé de la partie aval du circuit d'un pneumatique que l'on vient de gonfler, pour augmenter au préalable la pression de la partie aval du circuit d'un autre pneumatique que l'on souhaite gonfler.
- Le clapet est porté par la roue.
- Le dispositif comprend des moyens d'analyse de l'évolution de la pression mesurée par les moyens de mesure de pression en fonction du temps. Ces moyens d'analyse sont aptes à détecter une variation dans l'évolution de la pression due à l'ouverture du clapet. Une mesure de la pression du circuit à l'instant où le clapet s'ouvre permet d'estimer la pression du pneumatique.
- Le circuit comprend plusieurs éléments dont les jonctions entre eux, avec la source d'air ou avec le pneumatique sont adaptées pour autoriser une fuite d'air de débit très inférieur au débit de la source. Cette propriété permet au circuit de revenir à pression atmosphérique après avoir été mis sous pression, sans pour autant que la fuite d'air ne gêne la régulation de la pression dans le pneumatique.
- Les moyens de mesure de la pression sont un capteur de pression disposé en communication fluidique avec la branche amont du circuit d'alimentation et en aval des moyens générateurs de perte de charge.
- Les moyens de mesure de la pression sont un capteur de pression disposé en communication fluidique avec la cavité interne du pneumatique.

Le dispositif selon l'invention peut avantageusement être associé à un dispositif de mesure de la pression des pneumatiques d'un véhicule du type comprenant des moyens de comparaison des vitesses de rotation d'au moins deux pneumatiques.

Un dispositif de mesure de la pression des pneumatiques comprenant des moyens de comparaison des vitesses de rotation d'au moins deux pneumatiques est connu de l'état de la technique. Ce dispositif utilise la propriété suivante : lorsqu'un pneumatique est dégonflé, il s'écrase sous l'effet de la charge du véhicule ce qui a pour effet de modifier sa circonférence. Par conséquent, pour une vitesse linéaire donnée, un pneumatique dégonflé a une vitesse de rotation différente de celle d'un pneumatique correctement gonflé.

En comparant les vitesses de rotation des pneumatiques du véhicule, il devient donc possible de déterminer les pressions relatives des différents pneumatiques.

Cependant, en virage, un pneu externe tourne toujours plus vite qu'un pneu interne. Par conséquent, dans certaines conditions d'utilisation du véhicule, comme par exemple sur des routes sinueuses de montagne, les différences de vitesse de rotation des pneumatiques ne sont pas seulement dues à des différences de pression des pneumatiques. Dans certaines situations, la comparaison des vitesses de rotation des pneumatiques est donc inefficace pour déterminer les différentes pressions des pneumatiques du véhicule. Il est donc avantageux de coupler des moyens de comparaison des vitesses de rotation des pneumatiques avec un dispositif de régulation de la pression d'un pneumatique tel que précédemment décrit, de façon à obtenir un dispositif de mesure de la pression des pneumatiques opérationnel quelles que soient les conditions d'utilisation du pneumatique.

Selon un mode de réalisation particulier, le dispositif comprend des moyens d'estimation de la pression dans un pneumatique à partir des moyens de comparaison et/ou des moyens de mesure de pression. Grâce à cette réalisation particulière, la pression dans le pneumatique est estimée, soit à partir des moyens de comparaison, lorsque les conditions d'utilisation du pneumatique le permettent, soit à partir du capteur de pression dans la partie aval du circuit dans le reste des cas. Les moyens de comparaison étant des moyens logiciels, ils sont plus simples à utiliser et consomment moins d'énergie que le dispositif de régulation de la pression d'un pneumatique selon l'invention tout en permettant une surveillance quasi continue. Il est donc avantageux d'utiliser aussi souvent que possible les moyens de comparaison pour estimer la pression du pneumatique.

Du fait que l'invention permet de s'affranchir des problèmes d'instabilité de pression dans le circuit d'alimentation d'air ou dans le pneumatique, on peut envisager de mesurer ou pour le moins d'estimer la pression dans le pneumatique aussi souvent que possible en mettant en oeuvre un procédé d'un autre type que celui évoqué précédemment, qui évite notamment le risque de gonflage anormal du pneumatique.

Ainsi, l'invention a également pour objet un procédé de mesure et de régulation de la pression d'un pneumatique d'un véhicule automobile au moyen d'un dispositif de mesure et de régulation tel que défini précédemment, dans lequel les moyens de mesure de pression mesurent la pression dans le circuit, caractérisé en ce que :
- on alimente le circuit en air sous pression,
- on mesure la pression dans le circuit,
- on analyse l'évolution de la pression mesurée en fonction du temps.

Grâce à l'invention, le suivi de l'évolution de la pression mesurée permet d'obtenir une estimation par valeurs inférieures de la pression du pneumatique fondée sur la mesure de pression dans le circuit avant mise en communication de ce circuit avec le pneumatique. Par conséquent, la mesure de pression du pneumatique n'introduit pas nécessairement d'air dans le pneumatique.

Un procédé de mesure et de régulation de la pression selon l'invention peut en outre comporter l'une ou plusieurs des caractéristiques suivantes :
- On analyse l'évolution de la pression mesurée de façon à détecter un événement choisi parmi un événement caractérisant l'ouverture du clapet et le dépassement d'un seuil de pression déterminé. Ces deux événements sont particulièrement intéressants pour l'estimation de la pression régnant à l'intérieur du pneumatique. En effet, lors du premier événement on sait que la pression dans le circuit est sensiblement égale à la pression dans le pneumatique. Lors du second événement, on sait que la pression dans le pneumatique est au moins égale à la pression prédéterminée.
- Lorsque le premier événement détecté est l'ouverture du clapet, on maintient l'alimentation en air du circuit de façon à gonfler le pneumatique. Pour gonfler le pneumatique, il faut tout d'abord que le clapet s'ouvre. Une fois que l'on sait que le clapet est ouvert, c'est-à-dire lorsque le premier événement est détecté, on gonfle le pneumatique en maintenant l'alimentation en air.
- Lorsque le premier événement détecté est le dépassement du seuil de pression prédéterminé, on arrête l'alimentation en air du circuit, la pression dans le pneumatique étant estimée en fonction du seuil. Ceci permet d'avoir une estimation par valeur inférieure de la pression dans le pneumatique.
- Lorsque l'ouverture du clapet suit le dépassement du seuil de pression prédéterminé, on arrête l'alimentation en air du circuit, la pression dans le pneumatique étant assimilée à la pression donnée par le capteur de pression. Dans certaines situations, on souhaite connaître la pression exacte dans le pneumatique, même si cette pression est supérieure à un seuil de pression minimum prédéterminé. On arrête donc l'alimentation uniquement lorsqu'on a détecté l'ouverture du clapet.
- Le procédé est destiné à la mesure et à la régulation de la pression dans un premier et un second pneumatiques au moyen d'un dispositif de régulation tel que précédemment défini, dans lequel, après avoir mesuré ou régulé la pression dans le premier pneumatique, on ouvre l'électrovanne du circuit d'alimentation du second pneumatique de façon à réduire brusquement la pression dans le circuit d'alimentation du premier pneumatique pour fermer le clapet du circuit du premier pneumatique. Cette étape est applicable quelle que soit la variante du dispositif selon l'invention.

L'invention sera mieux comprise à la lecture de la description qui va suivre donnée uniquement à titre d'exemple et faite en se référant aux dessins annexés dans lesquels :
- la figure 1 est un schéma d'un dispositif de régulation de la pression des pneumatiques d'un véhicule automobile, selon un premier mode de réalisation de l'invention ;
- la figure 2 est un schéma d'un dispositif de régulation selon un second mode de réalisation de l'invention ;
- les figures 3 à 6 sont des graphiques représentant l'évolution de la pression dans le circuit d'alimentation d'air du dispositif représenté sur la figure 1, en fonction du temps, dans quatre configurations différentes ; et
- la figure 7 est un schéma d'un dispositif de régulation de la pression selon un troisième mode de réalisation de l'invention.

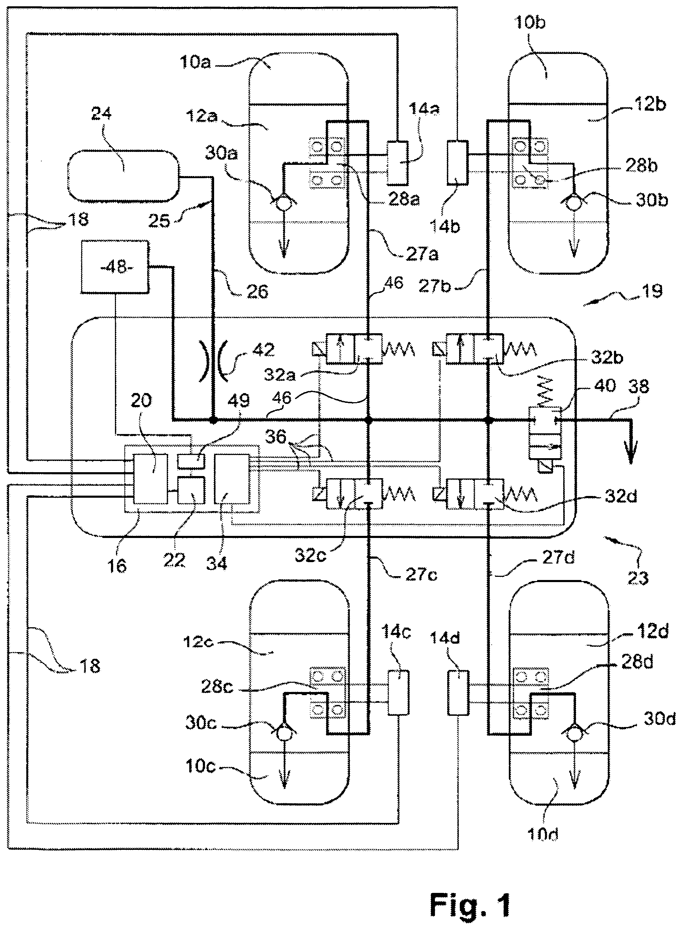

On a représenté schématiquement sur la figure 1 quatre pneumatiques d'un véhicule automobile. Ces quatre pneumatiques sont désignés par les références générales 10a, 10b, 10c, 10d. On distinguera les pneumatiques 10a et 10b qui font partie d'un essieu avant du véhicule, des pneumatiques 10c et 10d qui font partie d'un essieu arrière du véhicule. Chaque pneumatique 10a, 10b, 10c, 10d est monté sur une roue 12a, 12b, 12c, 12d de véhicule.

Chaque roue 12a, 12b, 12c, 12d est reliée à un capteur 14a, 14b, 14c, 14d de vitesse de rotation de la roue. De tels capteurs 14a, 14b, 14c, 14d sont classiquement utilisés dans les dispositifs d'anti-blocage des roues de type ABS (Anti-Blocking System). Chacun des capteurs 14a, 14b, 14c, 14d est relié à un calculateur 16 du véhicule au moyen de câbles électriques 18.

Les mesures fournies par les capteurs 14a, 14b, 14c, 14d sont traitées par des moyens 20 de comparaison des vitesses de rotation des roues intégrés dans le calculateur 16.

Le calculateur 16 comprend également des moyens 22 d'estimation de la pression dans les pneumatiques 10a, 10b, 10c, 10d, aptes à utiliser des données fournies par les moyens 20 de comparaison des vitesses de rotation des pneumatiques pour estimer la pression des pneumatiques. L'estimation de la pression des pneumatiques fournie par les moyens 22 est correcte dans la majorité des cas, mais il peut arriver, notamment sur des routes sinueuses, que cette estimation de la pression soit mauvaise.

Le véhicule automobile comprend par conséquent un dispositif 19 de mesure et de régulation de la pression des pneumatiques, qui comporte, outre les moyens 20 de comparaison des vitesses de rotation des pneumatiques, un dispositif 23 de mesure et de régulation de la pression selon l'invention relié aux moyens 22 d'estimation de la pression. Les moyens 22 estiment alors la pression dans les pneumatiques à partir des moyens de comparaison 20 et/ou de mesures de pression fournies par le dispositif 23.

Le dispositif 23 de régulation de la pression des pneumatiques comprend une source 24 d'air sous pression pilotable par le calculateur 16. Cette source d'air 24 est par exemple un compresseur ou une bouteille d'air sous pression dont le dispositif de mise en marche ou de mise en communication n'est pas représenté.

La source d'air 24 est reliée aux quatre pneumatiques 10a, 10b, 10c, 10d par un circuit d'alimentation 25. Selon un premier mode de réalisation, le circuit d'alimentation 25 comprend une branche amont 26 connectée à quatre branches aval 27a, 27b, 27c, 27d. La branche amont 26 est reliée à la source d'air 24 et chaque branche aval 27a, 27b, 27c, 27d est reliée à un pneumatique au moyen d'un roulement à passage d'air 28a, 28b, 28c, 28d et d'un clapet 30a, 30b, 30c, 30d. Il est à noter qu'à la figure 1, les quatre roulements schématisés correspondent à des roulements pour essieux moteurs.

Le clapet 30a, 30b, 30c, 30d est constitué par un clapet anti-retour classique s'ouvrant lorsque la pression dans la branche aval 27a, 27b, 27c, 27d dépasse la pression dans le pneumatique 10a, 10b, 10c, 10d d'une valeur prédéterminée, de préférence voisine de zéro. Généralement, la valeur prédéterminée est faible et est de l'ordre de 10 millibars pour un clapet de bonne qualité. Cette valeur étant pratiquement constante tout au long de la vie du clapet, il est facile de la modéliser et d'en tenir compte lors de la mesure de la pression dans le pneumatique.

Une électrovanne 32a, 32b, 32c, 32d est intercalée sur chaque branche aval 27a, 27b, 27c, 27d entre le pneumatique et la source d'air 24. Les électrovannes 32a, 32b, 32c, 32d sont reliées électriquement à des moyens 34 de commande du calculateur 16, par des câbles électriques 36. Les moyens de commande 34 permettent de commander de manière indépendante l'ouverture ou la fermeture des branches aval 27a, 27b, 27c, 27d du circuit d'alimentation 25.

Un circuit d'échappement 38 comprenant une électrovanne d'échappement 40 reliée aux moyens de commande 34, est relié à la branche amont 26 du circuit d'alimentation 25.

La branche amont 26 du circuit 25 comprend un étranglement 42 constituant des moyens générateurs de perte de charge. L'étranglement 42 est dimensionné pour que la perte de charge dans la partie 46 du circuit en aval de l'étranglement, plus simplement appelée partie aval 46, soit inférieure à 10 % de la perte de charge dans l'étranglement 42. La partie aval 46 comporte donc, lorsque l'électrovanne 32a est ouverte et les quatre autres fermées, la partie de la branche amont 26 située en aval de l'étranglement 42 ainsi que la branche aval 27a du circuit 25 reliée au pneumatique 10a. On rappelle que la perte de charge subie par un fluide circulant dans un circuit correspond à la différence entre la pression du fluide lorsqu'il entre dans le circuit et la pression du fluide lorsqu'il en sort. On admet généralement que la perte de charge est proportionnelle à la longueur du circuit, au carré de la vitesse de propagation du fluide dans le circuit, et inversement proportionnelle au diamètre du circuit.

La perte de charge d'un circuit est estimable, soit par mesure directe sur le circuit 10 lui-même ou sur une reproduction du circuit, soit par modélisation informatique.

L'étranglement 42 provoque l'essentiel de la perte de charge dans le circuit d'alimentation 25. Par conséquent, la pression de l'air dans la partie aval 46 est sensiblement uniforme, même pendant les phases de gonflage. Un étranglement ayant pour effet une telle perte de charge peut être obtenu, pour une conduite de diamètre nominal supérieur à 2 mm, au moyen d'un gicleur de section réduite, par exemple de diamètre 1 mm.

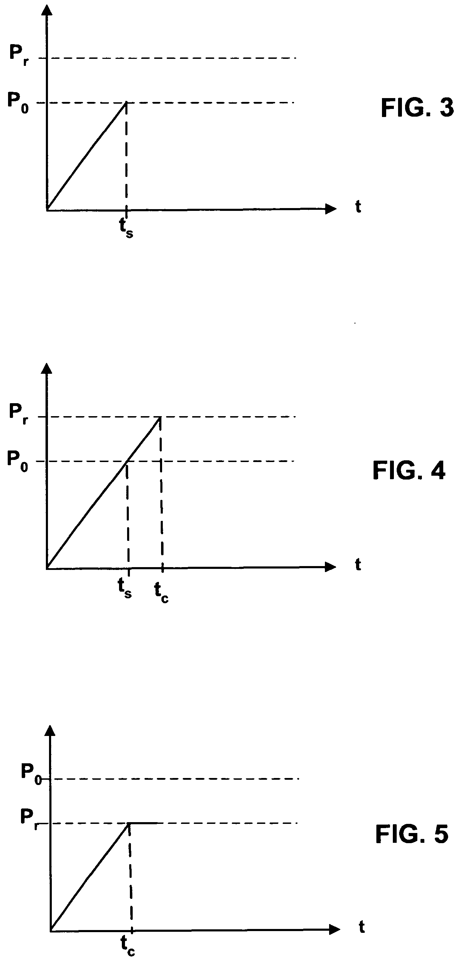

Le dispositif 23 de régulation de la pression selon l'invention comprend également des moyens 48 de mesure de la pression de l'air dans la partie aval 46 du circuit. Ces moyens 48 comprennent un capteur de pression classique 48. Le capteur de pression 48 est relié à des moyens 49 d'analyse de l'évolution de la pression mesurée par le capteur 48. Ces moyens d'analyse 49 font partie du calculateur 16 et sont reliés aux moyens 22 d'estimation de la pression des pneumatiques. On décrira ci-dessous le fonctionnement du dispositif 23 de mesure et de régulation de la pression des pneumatiques du véhicule en référence aux figures 3 à 6. Comme mentionné précédemment, dans la majorité des cas, la pression des pneumatiques est estimée par les moyens 22 à partir des moyens de comparaison 20. Dans le reste des cas, les moyens 22 d'estimation de la pression des pneumatiques utilisent le dispositif 23 de régulation de la pression de l'invention.

On décrira ci-dessous plus en détail le procédé de mesure et de régulation de la pression au moyen du dispositif de régulation 23 selon le premier mode de réalisation de l'invention. Ce procédé permet :
- de vérifier que la pression dans le pneumatique est au moins égale à un seuil de pression P₀ prédéterminé ;
- de mesurer la pression dans le pneumatique ; ou
- de gonfler le pneumatique.

Le dispositif de régulation 23 selon le premier mode de réalisation de l'invention permet d'agir indépendamment sur l'un quelconque des pneumatiques du véhicule. On considère par exemple le pneumatique 10a.

Pour mesurer et/ou réguler la pression du pneumatique 10a, les moyens de commande 34 du calculateur 16 commandent tout d'abord l'ouverture de l'électrovanne 32a et la fermeture des autres électrovannes 32b, 32c et 32d ainsi que 40 s'il y a lieu.

Ensuite, le calculateur commande le début de l'alimentation en air sous pression du circuit d'alimentation 25. Grâce aux électrovannes, seule la branche aval 27a est alimentée en air.

Au cours de l'alimentation en air du circuit 25, le calculateur mesure la pression dans le circuit au moyen du capteur de pression 48. Grâce à l'étranglement 42, on sait que la pression mesurée est sensiblement égale à la pression s'exerçant en amont du clapet 30a qui est donc soumis, d'une part, à la pression dans le pneumatique 10a, et d'autre part, à la pression dans la branche aval 27a mesurée par le capteur 48. Les valeurs relatives de ces deux pressions déterminent l'état ouvert ou fermé du clapet.

L'évolution de la pression mesurée en fonction du temps est analysée par les moyens d'analyse 49 de façon à détecter l'ouverture du clapet 30a et/ou le dépassement du seuil de pression P₀ prédéterminé.

On peut facilement détecter l'ouverture du clapet 30a en analysant l'évolution de la pente de la courbe donnant la pression mesurée en fonction du temps. En effet, lorsque le clapet est fermé, la source d'air 24 alimente un petit volume constitué par le circuit 25. La pression dans le circuit 25 mesurée par le capteur 48 augmente donc très rapidement au cours du temps. En revanche, lorsque le clapet est ouvert, la source d'air 24 alimente un grand volume constitué par le circuit 25 et le pneumatique 10a. Comme la source d'air doit remplir un volume plus grand que lorsque le clapet est fermé, la pression mesurée par le capteur 48 augmente plus lentement. Par conséquent, les moyens 49 analysent la pente de la courbe donnant la pression mesurée en fonction du temps pour détecter l'ouverture du clapet.

Suivant la chronologie de détection des deux événements définis plus haut, on peut rencontrer les quatre configurations suivantes.

Dans le cas de la figure 3, le premier événement détecté par les moyens d'analyse 49 est le dépassement, à l'instant tₛ, de la valeur de pression P₀ prédéterminée. Dans ce cas, comme l'ouverture du clapet n'a pas encore été détectée, on sait que la pression réelle Pᵣ dans le pneumatique est au moins égale à la valeur P₀. Si cette valeur P₀ est réglée comme une valeur de pression minimale admissible, on arrête l'alimentation en air du circuit. On obtient donc une estimation de la valeur de pression dans le pneumatique sans avoir injecté d'air dans celui-ci. On utilise ensuite l'électrovanne d'échappement 40 pour supprimer la pression dans le circuit.

Dans le cas de la figure 4, le premier événement détecté par les moyens d'analyse 49 est également le dépassement, à l'instant tₛ, de la valeur de pression P₀ prédéterminée. Cependant, si le calculateur souhaite connaître la valeur exacte de la pression dans le pneumatique (bien qu'elle soit supérieure à la valeur minimale admissible), il maintient l'alimentation en air jusqu'à détecter, à un instant t_{c}, l'ouverture du clapet. La pression Pᵣ mesurée à l'instant t_{c} est égale à la pression réelle dans le pneumatique. On utilise ensuite l'électrovanne d'échappement 40 pour supprimer la pression dans le circuit.

Dans le cas de la figure 5, le premier événement détecté par les moyens d'analyse 49 est l'ouverture du clapet à l'instant t_{c}, avant d'avoir atteint la valeur de pression P₀. Si le calculateur 16 souhaite mesurer la pression réelle dans le pneumatique, sans le gonfler, il commande l'arrêt de la source d'air. La pression Pᵣ mesurée à l'instant t_{c} est égale à la pression dans le pneumatique. On utilise ensuite l'électrovanne d'échappement 40 pour supprimer la pression dans le circuit.

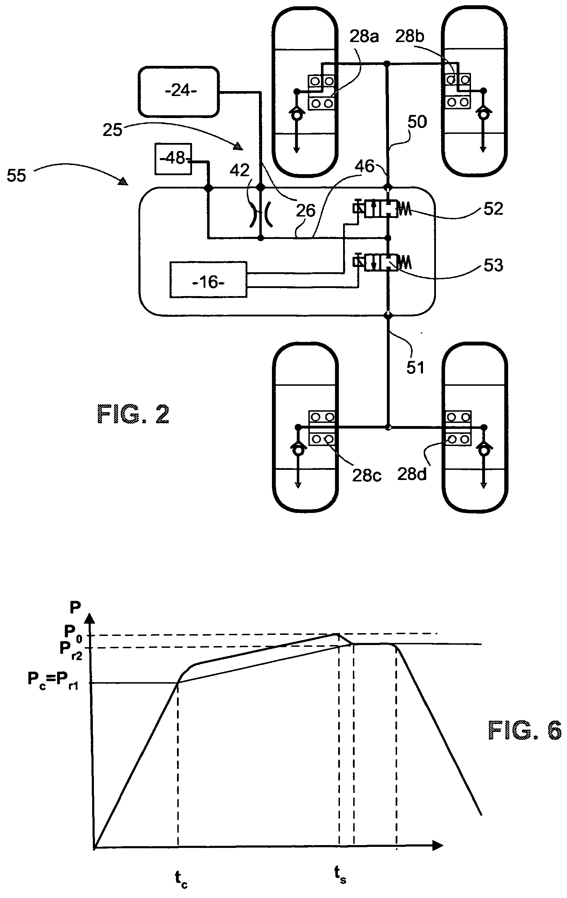

Enfin, dans le cas de la figure 6, le premier événement détecté par les moyens d'analyse 49 est l'ouverture du clapet à l'instant t_{c}. La valeur de pression mesurée Pᵣ₁ est alors inférieure à la pression P₀. L'alimentation en air est maintenue et la pression dans le pneumatique augmente au cours du temps. On constate sur la figure 6, qu'au cours du gonflage, la pression mesurée (représentée par une courbe en trait épais) est légèrement supérieure à la pression réelle dans le pneumatique (représentée par une courbe en trait fin). Cette différence est due au débit d'air.

A un instant tₛ, la pression mesurée dépasse la valeur seuil P₀. Le calculateur arrête alors l'alimentation en air et la pression dans le circuit et dans le pneumatique s'équilibre à une valeur Pᵣ₂. La mesure de cette pression d'équilibre par le capteur de pression 48 permet de connaître la valeur exacte de la pression dans le pneumatique. Une fois cette pression mesurée, le calculateur actionne l'électrovanne d'échappement 40 ce qui a pour effet de faire baisser très rapidement la pression dans le circuit. La différence de pression entre le circuit et le pneumatique ferme automatique le clapet 30a.

Le procédé qui vient d'être décrit peut être appliqué à chacun des pneumatiques du véhicule en actionnant successivement les électrovannes. En particulier, pour réduire l'énergie consommée par la source d'air 24, il est possible d'agir sur les électrovannes de la façon suivante.

On suppose que l'on a agit sur le pneumatique 10a. La branche aval 27a est donc sous pression. Plutôt que de réduire la pression dans la branche aval 27a au moyen de l'électrovanne d'échappement 40, il est possible d'ouvrir l'électrovanne d'un autre pneumatique, par exemple l'électrovanne 32b, de façon à délester la pression d'une branche à l'autre. La brusque chute de pression de l'ordre de plusieurs centaines de millibars est suffisante pour fermer le clapet 30a. On augmente alors la pression dans la branche aval 27b du pneumatique 10b avant même d'avoir démarré l'alimentation en air du circuit par la source d'air 24. Cela permet de plus de diminuer la durée de mise sous pression de la branche aval 27b.

Selon un second mode de réalisation représenté sur la figure 2, la branche amont 26 du circuit d'alimentation 25 est connectée à deux branches aval 50 et 51. La branche aval 50 est reliée aux deux pneumatiques 10a et 10b, et la branche aval 51 est reliée aux deux pneumatiques 10c et 10d. Les électrovannes 52 et 53 sont intercalées respectivement sur les branches aval 50 et 51. Cette configuration particulière du dispositif de régulation 55 permet de réduire le nombre d'électrovannes du dispositif et donc de réduire son coût. Il permet aussi d'équilibrer la pression des deux pneumatiques d'un même essieu comme décrit ci-dessous. Dans le mode de réalisation représenté, les roulements à passage d'air 28a et 28b correspondent à un essieu moteur, les roulements 28c et 28d à un essieu tracté.

Comme les pneumatiques sont reliés deux à deux à une branche aval du circuit d'alimentation, en ouvrant l'électrovanne 52 et en alimentant le circuit avec la source d'air 24, on met sous pression les deux clapets 30a et 30b.

Les moyens d'analyse 49 sont aptes à détecter si aucun des deux clapets 30a et 30b n'est ouvert, si un seul clapet est ouvert, ou si les deux clapets sont ouverts. Par conséquent, les moyens 49 analysent l'évolution de la pression mesurée par le capteur 48 en fonction du temps de façon à détecter l'ouverture d'un clapet, l'ouverture des deux clapets ou le dépassement d'un seuil de pression prédéterminé.

Il est particulièrement intéressant de détecter l'ouverture des deux clapets car on sait alors que les deux pneumatiques 10a et 10b sont à la même pression.

Supposons qu'au cours de l'alimentation en air, le clapet 30a s'ouvre le premier. Cela signifie donc que le pneumatique 10a est moins gonflé que le pneumatique 10b. En poursuivant l'alimentation en air, on ne gonfle donc que le pneumatique 10a jusqu'à ce qu'on détecte l'ouverture du clapet 30b. On peut alors poursuivre le gonflage simultané des deux pneumatiques jusqu'à atteindre le seuil de pression prédéterminé.

Le dispositif 55 de régulation de la pression présenté à la figure 2 ne comprend pas d'électrovanne d'échappement. La fermeture d'un clapet d'une branche aval est alors obtenue par délestage de l'air sous pression dans une autre branche. La mise à pression atmosphérique du circuit d'alimentation est ensuite obtenue grâce à une fuite calibrée ou une étanchéité non complète au niveau des jonctions entre les différents éléments du circuit, par exemple à la liaison moyeu/transmission, à la face d'appui entre la roue et le disque de frein ou sur le diamètre extérieur du roulement. Une étanchéité non complète au niveau de ces jonctions peut être obtenue par mise en contact étroit de pièces en métal ce qui ne permet pas d'obtenir des jonctions parfaitement étanches. Des tests ont montré que ces fuites sont par exemple de 2 L/min et par roue, ce qui est faible par rapport au débit de la source d'air qui peut être est de l'ordre de 20 L/min.

Ce dispositif 55 de mesure et de régulation de la pression présenté à la figure 2 peut bien entendu être associé à des moyens de comparaison des vitesses de rotation des roues d'un véhicule tels que décrits et représentés à la figure 1.

Selon une variante non représentée, l'étranglement est dimensionné pour que la perte de charge dans la partie aval, soit inférieure à 10 % de la perte de charge totale créée par le circuit entre la source et le pneumatique.

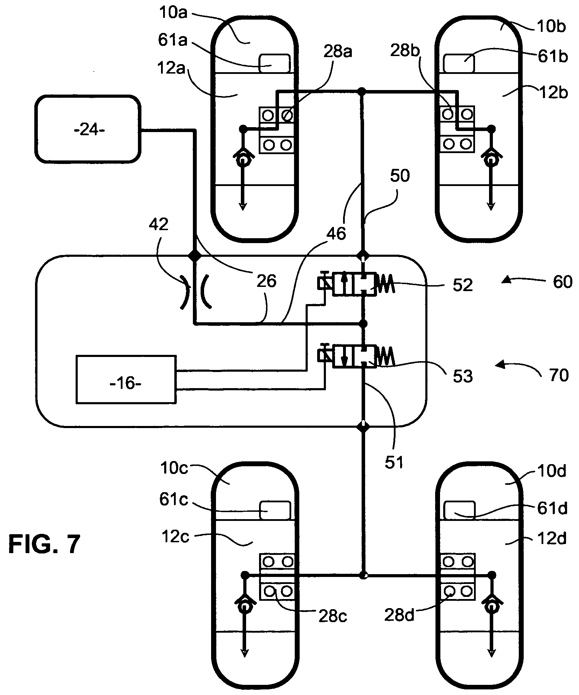

Enfin, une autre variante 60 est représentée à la figure 7. Cette figure représente un dispositif de mesure de la pression des pneumatiques 70 dans lequel chaque pneumatique 10a, 10b, 10c, 10d, comprend un capteur 61a, 61b, 61c, 61d mesurant sa pression associé à un dispositif de régulation 60. Ce capteur est d'un type usuel, il comporte des moyens pour transmettre par radio à un calculateur situé dans le véhicule les valeurs de pression ; ce calculateur peut être le calculateur 16. Le dispositif de régulation est similaire à celui présenté à la figure 2 avec comme seule différence le fait qu'il ne comprend pas de capteur de pression disposé dans la branche amont du circuit d'alimentation. Il n'est pas non plus nécessaire de disposer des moyens d'analyse 49 associés. Comme précédemment, l'étranglement dans le circuit d'alimentation permet alors que la pression en aval de l'étranglement soit stable et sensiblement égale à la pression dans le pneumatique, lors de son gonflage.

Dans cette variante, les phases de gonflage sont avantageusement déclenchées par une mesure de pression insuffisante dans l'un des pneumatiques du véhicule. La vitesse de regonflage est limitée par l'étranglement. Il est alors inutile d'augmenter la fréquence d'émission du capteur. On peut piloter le dispositif de régulation par une durée donnée, fixe ou variable, de gonflage. Cette durée peut notamment être déterminée en fonction de l'augmentation de pression à atteindre.

## Revendications

1. Dispositif (19, 23, 55, 60) de mesure et de régulation de la pression d'au moins un pneumatique (10a, 10b, 10c, 10d) monté sur une roue (12a, 12b, 12c, 12d) de véhicule, du type comprenant :
- une source (24) d'air sous pression,
- un circuit (25, 26, 27a, 27b, 27c, 27d, 46 ; 50, 51) d'alimentation d'air reliant la source (24) au pneumatique (10a, 10b, 10c, 10d), et
- des moyens (61a, 61b, 61c, 61d, 48) de mesure de pression dans le circuit (25) ou dans le pneumatique (10a, 10b, 10c, 10d) ; des moyens (42) intercalés dans le circuit (25, 26, 27a, 27b, 27c, 27d, 46 ; 50, 51), destinés à générer une perte de charge forcée;
- les moyens (61, 48) de mesure de pression mesurant la pression, dans le pneumatique ou dans le circuit, sont en aval des moyens (42) générateurs de perte de charge; **caractérisé en ce que** la perte de charge du circuit (46) en aval des moyens (42) générateurs de perte de charge étant inférieure à 10% de la perte de charge générée par les moyens (42) générateurs de perte de charge

2. Dispositif (19, 23, 55, 60) selon la revendication 1, dans lequel la perte de charge du circuit (46) en aval des moyens (42) générateurs de perte de charge est comprise entre 3% et 6% de la perte de charge des moyens (42) générateurs de perte de charge.

3. Dispositif (19, 23, 55, 60) selon la revendication 1 ou 2, dans lequel les moyens (42) générateurs de perte de charge comprennent un étranglement.

4. Dispositif (19, 23, 55, 60) selon la revendication 3, dans lequel l'étranglement comprend au moins un gicleur.

5. Dispositif (19, 23, 55, 60) selon l'une quelconque des revendications 1 à 4, dans lequel la partie aval (46) du circuit comprend un clapet (30a, 30b, 30c, 30d) s'ouvrant lorsque la pression dans la partie aval (46) du circuit dépasse la pression dans le pneumatique (10a, 10b, 10c, 10d) d'une valeur prédéterminée, de préférence voisine de zéro.

6. Dispositif (19, 23, 55, 60) selon la revendication 5, dans lequel la partie aval (46) du circuit comprend une électrovanne (32a, 32b, 32c, 32d ; 52, 53) intercalée en amont du clapet (30a, 30b, 30c, 30d).

7. Dispositif (19, 23, 55, 60) selon la revendication 6, pour réguler la pression de deux pneumatiques (10a, 10b, 10c, 10d) et comprenant une électrovanne (52, 53) commune aux deux circuits d'alimentation en air des deux pneumatiques, les parties (46) des circuits situées en aval de l'électrovanne étant en communication fluidique.

8. Dispositif (19, 23, 55, 60) selon la revendication 6 ou 7, pour réguler la pression d'au moins deux pneumatiques (10a, 10b, 10c, 10d), dont chaque circuit d'alimentation (25, 26, 27a, 27b, 27c, 27d, 46 ; 50, 51) comprend une électrovanne (32a, 32b, 32c, 32d ; 52, 53), les électrovannes étant agencées pour permettre une communication fluidique entre les parties des circuits d'alimentation situées en amont des électrovannes.

9. Dispositif (19, 23, 55, 60) selon l'une quelconque des revendications 5 à 8, dans lequel le clapet (30a, 30b, 30c, 30d) est porté par la roue (12a, 12b, 12c, 12d).

10. Dispositif (19, 23, 55, 60) selon l'une quelconque des revendications précédentes, dans lequel le circuit comprend plusieurs éléments dont les jonctions entre eux, avec la source d'air ou avec le pneumatique sont adaptées pour autoriser une fuite d'air de débit très inférieur au débit de la source (24).

11. Dispositif (19, 23, 55) selon l'une quelconque des revendications précédentes, comprenant des moyens (49) d'analyse de l'évolution de la pression mesurée par les moyens (48) de mesure de pression en fonction du temps.

12. Dispositif (19, 23, 55) selon l'une quelconque des revendications précédentes, dans lequel les moyens de mesure de pression sont un capteur de pression (48) disposé en communication fluidique avec la branche amont (26) du circuit (25) et en aval des moyens générateurs de perte de charge (42).

13. Dispositif (19) selon la revendication 12, tel qu'il comporte en plus des moyens (20) de comparaison des vitesses de rotation d'au moins deux roues (12a, 12b, 12c, 12d).

14. Dispositif (19) selon la revendication 13 comprenant des moyens (22) d'estimation de la pression dans un pneumatique à partir des moyens de comparaison (20) et/ou des moyens (48) de mesure de pression.

15. Dispositif (60) selon l'une quelconque des revendications 1 à 10, dans lequel les moyens de mesure de pression sont un capteur de pression (61) disposé en communication fluidique avec la cavité interne du pneumatique (10a, 10b, 10c, 10d).

16. Procédé de mesure et de régulation de la pression d'au moins un pneumatique (10a, 10b, 10c, 10d) d'un véhicule automobile au moyen d'un dispositif (19, 23, 55) selon l'une quelconque des revendications 1 à 14, dans lequel les moyens (48) de mesure de pression mesurent la pression dans le circuit, **caractérisé en ce que** :
- on alimente le circuit en air sous pression,
- on mesure la pression dans le circuit,
- on analyse l'évolution de la pression mesurée en fonction du temps.

17. Procédé selon la revendication 16, le dispositif (19, 23, 55) étant selon les revendications 5 et 11, dans lequel on analyse l'évolution de la pression mesurée de façon à détecter un événement choisi parmi un événement caractérisant l'ouverture du clapet (30a, 30b, 30c, 30d) et le dépassement d'un seuil de pression prédéterminé (P₀).

18. Procédé selon la revendication 17, dans lequel, lorsque le premier événement détecté est l'ouverture du clapet, on maintient l'alimentation en air du circuit de façon à gonfler le pneumatique (10a, 10b, 10c, 10d).

19. Procédé selon la revendication 17, dans lequel, lorsque le premier événement détecté est le dépassement du seuil de pression prédéterminé (P₀), on arrête l'alimentation en air du circuit, la pression dans le pneumatique (10a, 10b, 10c, 10d) étant estimée en fonction du seuil.

20. Procédé selon la revendication 17, dans lequel, lorsque l'ouverture du clapet (30a, 30b, 30c, 30d) suit le dépassement du seuil de pression prédéterminé (P₀), on arrête l'alimentation en air du circuit, la pression dans le pneumatique (10a, 10b, 10c, 10d) étant assimilée à la pression mesurée par les moyens (48) de mesure de pression.

21. Procédé pour la mesure et la régulation de la pression d'un premier et d'un second pneumatiques au moyen d'un dispositif (19, 23, 55, 60) selon la revendication 8 et l'une des revendications 12 ou 15, dans lequel, après avoir mesuré ou régulé la pression du premier pneumatique, on ouvre l'électrovanne du circuit d'alimentation du second pneumatique de façon à réduire brusquement la pression dans le circuit d'alimentation du premier pneumatique pour fermer le clapet (30a, 30b, 30c, 30d) du circuit du premier pneumatique.

## Patentansprüche

1. Vorrichtung (19, 23, 55, 60) zum Messen und Einstellen des Drucks wenigstens eines Luftreifens (10a, 10b, 10c, 10d), der an einem Fahrzeugrad (12a, 12b, 12c, 12d) montiert ist, des Typs, der umfasst:
- eine Quelle (24) für Druckluft,
- einen Kreis (25, 26, 27a, 27b, 27c, 27d, 46; 50, 51) für die Versorgung mit Luft, der die Quelle (24) mit dem Luftreifen (10a, 10b, 10c, 10d) verbindet, und
- Mittel (61a, 61b, 61c, 61d, 48) zum Messen des Drucks in dem Kreis (25) oder in dem Luftreifen (10a, 10b, 10c, 10d);
- Mittel (42), die in den Kreis (25, 26, 27a, 27b, 27c, 27d, 46; 50, 51) eingefügt sind und dazu bestimmt sind, einen erzwungenen Lastverlust zu erzeugen;
- Mittel (61, 48) zum Messen des Drucks, die den Druck in dem Luftreifen oder in dem Kreis messen und den Lastverlust-Erzeugungsmitteln (42) nachgeschaltet sind,
**dadurch gekennzeichnet, dass**
der Lastverlust des Kreises (46), der den Lastverlust-Erzeugungsmitteln (42) nachgeschaltet ist, kleiner als 10 % des Lastverlusts ist, der durch die Lastverlust-Erzeugungsmittel (42) erzeugt wird.

2. Vorrichtung (19, 23, 55, 60) nach Anspruch 1, wobei der Lastverlust des Kreises (46), der den Lastverlust-Erzeugungsmitteln (42) nachgeschaltet ist, im Bereich von 3 % bis 6 % des Lastverlusts der Lastverlust-Erzeugungsmittel (42) liegt.

3. Vorrichtung (19, 23, 55, 60) nach Anspruch 1 oder 2, wobei die Lastverlust-Erzeugungsmittel (42) eine Einschnürung enthalten.

4. Vorrichtung (19, 23, 55, 60) nach Anspruch 3, wobei die Einschnürung wenigstens eine Düse umfasst.

5. Vorrichtung (19, 23, 55, 60) nach einem der Ansprüche 1 bis 4, wobei der nachgeschaltete Teil (46) des Kreises ein Ventil (30a, 30b, 30c, 30d) umfasst, das sich öffnet, wenn der Druck in dem nachgeschalteten Teil (46) des Kreises den Druck in dem Luftreifen (10a, 10b, 10c, 10d) um einen vorgegebenen Wert vorzugsweise in der Nähe von null überschreitet.

6. Vorrichtung (19, 23, 55, 60) nach Anspruch 5, wobei der nachgeschaltete Teil (46) des Kreises ein Elektroventil (32a, 32b, 32c, 32d; 52, 53) umfasst, das stromaufseitig des Ventils (30a, 30b, 30c, 30d) eingefügt ist.

7. Vorrichtung (19, 23, 55, 60) nach Anspruch 6, um den Druck von zwei Luftreifen (10a, 10b, 10c, 10d) einzustellen, die ein Elektroventil (52, 53) umfasst, das den zwei Luftversorgungskreisen der zwei Luftreifen gemeinsam ist, wobei die Teile (46) der Kreise, die sich stromabwärts des Elektroventils befinden, in Fluidkommunikation stehen.

8. Vorrichtung (19, 23, 55, 60) nach Anspruch 6 oder 7, um den Druck wenigstens eines Luftreifens (10a, 10b, 10c, 10d) einzustellen, wobei jeder Versorgungskreis (25, 26, 27a, 27b, 27c, 27d, 46; 50, 51) ein Elektroventil (32a, 32b, 32c, 32d; 52, 53) umfasst, wobei die Elektroventile dafür ausgelegt sind, eine Fluidkommunikation zwischen den Teilen der Versorgungskreise, die den Elektroventilen vorgeschaltet sind, zuzulassen.

9. Vorrichtung (19, 23, 55, 60) nach einem der Ansprüche 5 bis 8, wobei das Ventil (30a, 30b, 30c, 30d) von dem Rad (12a, 12b, 12c, 12d) getragen wird.

10. Vorrichtung (19, 23, 55, 60) nach einem der vorhergehenden Ansprüche, wobei der Kreis mehrere Elemente umfasst, deren Verbindungen untereinander, mit der Luftquelle oder mit dem Luftreifen dafür ausgelegt sind, einen Luftleck-Durchsatz, der viel niedriger als der Durchsatz der Quelle (24) ist, zuzulassen.

11. Vorrichtung (19, 23, 55) nach einem der vorhergehenden Ansprüche, die Mittel (49) zum Analysieren der Entwicklung des Drucks, der von den Druckmessmitteln (48) gemessen wird, als Funktion der Zeit umfassen.

12. Vorrichtung (19, 23, 55) nach einem der vorhergehenden Ansprüche, wobei die Druckmessmittel ein Drucksensor (48) sind, der in Fluidkommunikation mit dem Zweig (26), der dem Kreis (25) vorgeschaltet und den Lastverlust-Erzeugungsmitteln (42) nachgeschaltet ist, angeordnet ist.

13. Vorrichtung (19) nach Anspruch 12, die außerdem Mittel (20) zum Vergleichen der Drehzahlen von wenigstens zwei Rädern (12a, 12b, 12c, 12d) umfasst.

14. Vorrichtung (19) nach Anspruch 13, die Mittel (22) zum Schätzen des Drucks in einem Luftreifen anhand der Vergleichsmittel (20) und/oder der Druckmessmittel (48) umfasst.

15. Vorrichtung (60) nach einem der Ansprüche 1 bis 10, wobei die Druckmessmittel ein Drucksensor (61) sind, der in Fluidkommunikation mit dem inneren Hohlraum des Luftreifens (10a, 10b, 10c, 10d) angeordnet ist.

16. Verfahren zum Messen und Einstellen des Drucks wenigstens eines Luftreifens (10a, 10b, 10c, 10d) eines Kraftfahrzeugs mittels einer Vorrichtung (19, 23, 55) nach einem der Ansprüche 1 bis 14, wobei die Druckmessmittel (48) den Druck in dem Kreis messen, **dadurch gekennzeichnet, dass**:
- der Kreis mit Druckluft versorgt wird,
- der Druck in dem Kreis gemessen wird,
- die Entwicklung des gemessenen Drucks als Funktion der Zeit analysiert wird.

17. Verfahren nach Anspruch 16, wobei die Vorrichtung (19, 23, 55) wie in einem der Ansprüche 5 und 11 ange-geben beschaffen ist, wobei die Entwicklung des gemessenen Drucks in der Weise analysiert wird, dass ein Ereignis, das aus einem Ereignis gewählt wird, das das Öffnen des Ventils (30a, 30b, 30c, 30d) und das Überschreiten eines vorgegebenen Druckschwellenwerts (P₀) charakterisiert, detektiert wird.

18. Verfahren nach Anspruch 17, wobei dann, wenn das erste detektierte Ereignis das Öffnen des Ventils ist, die Versorgung mit Luft des Kreises aufrecht erhalten wird, derart, dass der Luftreifen (10a, 10b, 10c, 10d) aufgeblasen wird.

19. Verfahren nach Anspruch 17, wobei dann, wenn das erste detektierte Ereignis das Überschreiten des vorgegebenen Druckschwellenwerts (P₀) ist, die Versorgung mit Luft des Kreises angehalten wird, wobei der Druck in dem Luftreifen (10a, 10b, 10c, 10d) als Funktion des Schwellenwerts geschätzt wird.

20. Verfahren nach Anspruch 17, wobei dann, wenn das Öffnen des Ventils (30a, 30b, 30c, 30d) dem Überschreiten des vorgegebenen Druckschwellenwerts (P₀) folgt, die Versorgung mit Luft des Kreises angehalten wird, wobei der Druck in dem Luftreifen (10a, 10b, 10c, 10d) an den von den Druckmessmitteln (48) gemessenen Druck angegli-chen wird.

21. Verfahren zum Messen und Einstellen des Drucks eines ersten und eines zweiten Luftreifens mittels einer Vorrichtung (19, 23, 55, 60) nach Anspruch 8 und einem der Ansprüche 12 oder 15, wobei dann, wenn der Druck des ersten Luftreifens gemessen oder eingestellt worden ist, das Elektroventil des Versorgungskreises des zweiten Luftreifens geöffnet wird, derart, dass der Druck in dem Versorgungskreis des ersten Luftreifens plötzlich verringert wird, um das Ventil (30a, 30b, 30c, 30d) des Kreises des ersten Luftreifens zu schließen.

## Claims

1. Device (19, 23, 55, 60) for measuring and regulating the pressure of at least one tyre (10a, 10b, 10c, 10d) fitted on a vehicle wheel (12a, 12b, 12c, 12d), of the type that comprises:
- a source (24) of compressed air;
- an air feed circuit (25, 26, 27a, 27b, 27c, 27d, 46; 50, 51) that connects the source (24) to the tyre (10a, 10b, 10c, 10d);
- means (61 a, 61 b, 61 c, 61 d, 48) for measuring the pressure in the circuit (25) or in the tyre (10a, 10b, 10c, 10d);
- means (42) interposed in the circuit (25, 26, 27a, 27b, 27c, 27d, 46, 50, 51) designed to produce a forced pressure drop;
- the pressure measurement means (61, 48) measuring the pressure in the tyre or in the circuit being downstream from the pressure drop production means (42);
**characterised in that** the pressure drop of the circuit (46) downstream from the pressure drop production means (42) is less than 10 % of the pressure drop produced by the pressure drop production means (42).

2. Device (19, 23, 55, 60) according to Claim 1, in which the pressure drop of the circuit (46) downstream from the pressure drop production means (42) is between 3% and 6% of the pressure drop of the pressure drop production means (42).

3. Device (19, 23, 55, 60) according to Claims 1 or 2, in which the pressure drop production means (42) comprise a constriction.

4. Device (19, 23, 55, 60) according to Claim 3, in which the constriction comprises at least one nozzle.

5. Device (19, 23, 55, 60) according to any of Claims 1 to 4, in which the downstream part (46) of the circuit comprises a check valve (30a, 30b, 30c, 30d) which opens when the pressure in the downstream part (46) of the circuit exceeds the pressure in the tyre (10a, 10b, 109c, 10d) by a predetermined value, preferably close to zero.

6. Device (19, 23, 55, 60) according to Claim 5, in which the downstream part (46) of the circuit comprises a solenoid valve (32a, 32b, 32c, 32d; 52, 53) interposed upstream from the check valve (30a, 30b, 30c, 30d).

7. Device (19, 23, 55, 60) according to Claim 6, for regulating the pressure of two tyres (10a, 10b, 10c,10d), comprising a solenoid valve (52, 53) common to the two air feed circuits of the two tyres, the parts (46) of the circuits located downstream from the said solenoid valve being in fluid communication.

8. Device (19, 23, 55, 60) according to Claims 6 or 7, for regulating the pressure of two tyres (10a, 10b, 10c,10d), each feed circuit (25, 26, 27a, 27b, 27c, 27d, 46; 50, 51) of which comprises a solenoid valve (32a, 32b, 32c, 32d; 52, 53), the said solenoid valves being arranged so as to enable fluid communication between the parts of the feed circuits located upstream from the solenoid valves.

9. Device (19, 23, 55, 60) according to any of Claims 5 to 9, in which the check valve (30a, 30b, 30c, 30d) is carried by the wheel (12a, 12b, 12c, 12d).

10. Device (19, 23, 55, 60) according to any of the preceding claims, in which the circuit comprises several elements whose junctions between one another, with the air source or with the tyre are designed to enable an air leak whose flow rate is much smaller than the flow rate coming from the source (24).

11. Device (19, 23, 55) according to any of the preceding claims, comprising means (49) for analysing the evolution of the pressure measured by the pressure measurement means (48) as a function of time.

12. Device (19, 23, 55) according to any of the preceding claims, in which the pressure measurement means consist of a pressure sensor (48) in fluid communication with the upstream branch (26) of the circuit (25) and downstream from the pressure drop production means (42).

13. Device (19) according to Claim 12, which also comprises means (20) for comparing the rotation speeds of at least two wheels (12a, 12b, 12c, 12d).

14. Device (19) according to Claim 13, comprising means (22) for estimating the pressure in a tyre from the said comparison means (20) and/or from the said pressure measurement means (48).

15. Device (60) according to any of Claims 1 to 10, in which the pressure measurement means consist of a pressure sensor (61) arranged in fluid communication with the internal cavity of the tyre (10a, 10b, 10c,10d).

16. Process for measuring and regulating the pressure of at least one tyre (10a, 10b, 10c,10d) of an automobile vehicle by means of a device (19, 23, 55) according to any of Claims 1 to 14, in which the which pressure measurement means (48) measure the pressure in the circuit, **characterised in that**:
- the circuit is fed with compressed air,
- the pressure in the circuit is measured,
- the evolution of the pressure measured is analysed as a function of time.

17. Process according to Claim 16, the device (19, 23 55) being according to Claims 5 and 11, in which the evolution of the pressure measured is analysed so as to detect an event chosen from between an event that characterises the opening of the check valve (30a, 30b, 30c, 30d) and one that indicates that a predetermined pressure threshold (P₀) has been exceeded.

18. Process according to Claim 17 in which, when the first event detected is the opening of the check valve, the air feed into the circuit is maintained so that the tyre (10a, 10b, 10c, 10d) is inflated.

19. Process according to Claim 17 in which, when the first event detected is that the predetermined pressure threshold (P₀) has been exceeded, the air feed into the circuit is stopped and the pressure in the tyre (10a, 10b, 10c, 10d) is estimated as a function of the said threshold.

20. Process according to Claim 17 in which, when the opening of the check valve (30a, 30b, 30c, 30d) occurs after the predetermined pressure threshold (P₀) has been exceeded, the air feed to the circuit is stopped and the pressure in the tyre (10a, 10b, 10c, 10d) is assimilated to the pressure measured by the pressure measurement means (48).

21. Process for the measurement and regulation of the pressure in a first and a second tyre by means of a device (19, 23, 55, 60) according to Claim 8 and either of Claims 12 or 15, in which, after having measured or regulated the pressure of the first tyre, the solenoid valve of the feed circuit of the second tyre is opened so as to reduce abruptly the pressure in the feed circuit of the first tyre in order to close the check valve (30a, 30b, 30c, 30d) of the circuit of the first tyre.
